**Europäisches Patentamt**

**European Patent Office**

**Office européen des brevets**

(19)

(11) Veröffentlichungsnummer : **0 143 936 B2**

(12) **NEUE EUROPÄISCHE PATENTSCHRIFT**

(45) Veröffentlichungstag der neuen Patentschrift :
**04.12.91 Patentblatt 91/49**

(51) Int. Cl.⁵ : **B23K 20/10**

(21) Anmeldenummer : **84111538.9**

(22) Anmeldetag : **27.09.84**

(54) **Vorrichtung zum Verbinden bzw. Verdichten elektrischer Leiter.**

(30) Priorität : **29.09.83 DE 3335254**

(43) Veröffentlichungstag der Anmeldung :
**12.06.85 Patentblatt 85/24**

(45) Bekanntmachung des Hinweises auf die
Patenterteilung :
**03.09.86 Patentblatt 86/36**

(45) Bekanntmachung des Hinweises auf die
Entscheidung über den Einspruch :
**04.12.91 Patentblatt 91/49**

(84) Benannte Vertragsstaaten :
**AT BE CH DE FR GB IT LI LU NL SE**

(56) Entgegenhaltungen :
**EP-A- 0 083 707**
**DE-C- 2 641 508**
**US-A- 4 032 382**
**US-A- 4 155 499**

(73) Patentinhaber : **Schunk Ultraschalltechnik
GmbH
Hauptstrasse 97 Postfach 1120
W-6301 Wettenberg1 (DE)**

(72) Erfinder : **Knapp, Herbert
Schubertstrasse 3
W-6107 Reinheim 1 (DE)**

(74) Vertreter : **Stoffregen, Hans-Herbert, Dr.
Dipl.-Phys.
Patentanwälte Strasse & Stoffregen
Salzstrasse 11a Postfach 2144
W-6450 Hanau/Main 1 (DE)**

EP 0 143 936 B2

## Beschreibung

Die Erfindung bezieht sich auf eine Vorrichtung zum Verbinden bzw. Verdichten elektrischer Leiter in Form von Litzen umfassend eine Schaltschwingungen erzeugende Sonotrode mit dieser zugeordneter und zu dieser relativ bewegbarer als Amboß dienender Gegenelektrode sowie einen zur Aufnahme der Leiter bestimmten Verdichtungsraum, von dem gegenüberliegende Begrenzungsflächen von jeweils zumindest einer Fläche der Sonotrode und des Ambosses gebildet sind, wobei der Verdichtungsraum in seinem Querschnitt in einer ersten Richtung durch Verändern des Abstands der Fläche von Sonotrode und Amboß einstellbar ist.

Eine entsprechende stationär ausgebildete Vorrichtung ist der DE-A-31 51 151 zu entnehmen. Mit Hilfe dieser mit Ultraschall betriebenen Anlage ist es erstmals möglich gewesen, elektrische Leiter wie zum Beispiel Litzen in der Art zu verbinden, daß auf die bisher üblichen die Knotenstelle umgebenden Hülsen verzichtet werden kann, wobei gleichzeitig eine hohe Festigkeit der Verbindung erzielt wird. Dabei werden die Litzen so innig miteinander verbunden, daß die Übergangswiderstände nicht durch Oxidation beeinflußt werden. Bei der in der DE-A-31 51 151 beschriebenen Vorrichtung befinden sich die Verdichtungsräume in bezug auf die Sonotrodenlängsachse außermittig und im Randbereich. Die Breite des ausschließlich von Sonotrode und Amboß gebildeten Verdichtungsraums ist während des Schweißvorganges unveränderlich. Um eine Anpassung an unterschiedliche Leiterquerschnitte zu ermöglichen, müssen Sonotrode und/oder Amboß in ihrer zugeordneten Stellung verändert werden.

Aufgabe der vorliegenden Erfindung ist es, eine Vorrichtung der eingangs genannten Art so auszubilden, daß bei einfachem Aufbau und leichter Handhebberkeit sichergestellt ist, daß der zwischen Sonotrode und Amboß befindliche Verdichtungsraum die zu verdichtenden bzw. zu verbindenden Leiter im erforderlichen Umfang aufnehmen kenn, wobei eine problemlose Anpassung an unterschiedliche Leiterabmessungen zu erfolgen hat. Dabei soll der Verdichtungsraum sicherstellen, daß die Leiter nicht unkontrolliert während der Schalleinwirkung aus dem Verdichtungsraum rutschen können.

Die Aufgabe wird erfindungsgemäß dadurch gelöst, daß die verbleibenden gegenüberliegenden Begrenzungsflächen von Begrenzungselementen gebildet sind, von denen zur Veränderung des Querschnitts des Verdichtungraums in einer zur ersten Richtung senkrecht verlaufenden Richtung zur Einstellung des Vedichtungsraums auf Leiter unterschiedlicher Querschnitte zumindest ein Begrenzungselement eine verschiebbare bzw. wegkippbare Backe ist. In Ausgestaltung weist die Sonotrode zumindest einen Vorsprung oder eine Ausnehmung auf, dem bzw. der ein Vorsprung des Ambosses zugeordnet ist, wobei die einender zugewandten Flächen des Vorsprungs oder der Ausnehmung der Sonotrode und des Vorsprungs des Ambosses die oberen und unteren Begrenzungswände bzw. -flächen des Verdichtungsraums bilden, der vorzugsweise zentral ober- oder unterhalb der Sonotrodenlängsachse angeordnet ist.

Durch die erfindungsgemäße Ausbildung der Vorrichtung ist sichergestellt, daß beim Verbinden bzw. Verdichten ein Verdichtungsraum zur Verfügung gestellt wird, der die Leiter vollständig aufnimmt, wobei eine Anpassung an unterschiedliche Leiterdimensionierungen möglich ist. Ferner wirken nach der Ausgestaltung auf die Sonotrode während des Verbindens bzw. Verdichtens der elektrischen Leiter im wesentlichen keine Querkräfte, die nach dem Stand der Technik nur durch Gegenlager oder einer anderwertigen besonderen Festlegung der Sonotrode ausgeglichen werden können. Durch die vorzugsweise zentrische Ausrichtung in Bezug auf die Sonotrodenlängsachse ergibt sich auch ein einfacher Aufbau des Verdichtungsraumes, wobei dessen seitliche Begrenzung durch die Begrenzungselemente vorzugsweise in Form von Backen erfolgt. Von den Begrenzungselementen ist in Ausgestaltung zumindest eines vorzugsweise senkrecht zur Sonotrodenlängsachse verschiebbar angeordnet. Dabei brauchen der Amboß und die Sonotrode nicht entlang einander zugeordneter Flächen verschoben werden, wodurch eine besondere passgenaue Ausrichtung der Elemente zueinander erforderlich ist. Vielmehr wird nach der erfindungsfemäßen Vorrichtung der Amboß in Richtung auf die Sonotrode im wesentlichen mittig zu der Sonotrodenlängsachse verschoben oder umgekehrt.

Erfindungsgemäß ist der Abstand zwischen den durch die Begrenzungselemente gebildeten Flächen in Abhängigkeit von der Stärke der zu verbindenden bzw. zu verdichtenden Leiter einstellbar, wobei erwähntermaßen nur eine Backe verschiebbar bzw. wegkippbar ausgebildet sein muß. Backen mit Amboß und Sonotrode bilden den umlaufend verschlossenen Verdichtungsraum, dessen Stirnwände offen sind, um durch diese die Enden der zu verbindenden elektrischen Leiter vorzugsweise in Form von Litzen führen zu können.

In weiterer hervorzuhebender Ausgestaltung der Erfindung braucht die Längsachse des Verdichtungsraums, die parallel zu den verbindenden Leitern verläuft, nicht parallel zur Sonotrodenlängsachse - wie es nach dem Stand der Technik angeregt ist - verlaufen. Vielmehr besteht die Möglichkeit, aufgrund der einfachen Ausbildung der Verdichtungsräume deren Längsachsen auch senkrecht zur Sonotrodenlängsachse anzuordnen. Dies hat insbesondere zum Einbringen bzw. Entfernen der elektrischen Leiter Vorteile.

Schließlich kann sich die erfindungsgemäße Vorrichtung dadurch auszeichnen, daß sie mobil ausgebildet ist. Demzufolge kann die Vorrichtung ein Handgerät sein, das zum Beispiel in der Automobilindustrie einzusetzen ist. Dabei brauchen die von einem Kabelbrett stammenden Litzen nur noch in den Verdichtungsraum eingebracht werden, um dann durch Erregung der Sonotrode vorzugsweise im Ultraschailbereich ein Verschweißen zu ermöglichen. Bei einem solchen Verfahrensschritt entfällt demzufolge das bekannte Crimpen. Durch die mobile Ausbildung der Vorrichtung, also der Zuverfügungstellung des Handgerätes ergibt sich ferner der Vorteil, daß mehrere Handgeräte von einer einzigen Steuerung bzw. von einem einzigen Generator versorgt werden können, so daß dadurch eine kostenmäßige Einsparung gegeben ist. Bei einer mobilen Ausbildung kann die Sonotrode und der Booster, die eine ineinanderübergehende Einheit bilden können, vorzugsweise in einem Abschnitt von einer vorzugsweise als Hohlzylinder ausgebildeten Halterung umgeben und von dieser an vorzugsweise zwei Punkten festgelegt sein. Von dieser Halterung geht sodann ein Handgriff aus, mit dem die Vorrichtung erfaßt und gehalten wird. Zu der Sonotrode kann dann der Amboß mittig ober- oder unterhalb der Sonotrodenlängsachse angeordnet und parallel zu der Sonotrode verschoben werden.

Die Erfindung wird nachstehend anhand von aus der Zeichnung zu entnehmenden bevorzugten Ausführungsbeispielen näher erläutert.

Es zeigen:

Fig. 1 einen Ausschnitt einer erfindungsgemäßen Vorrichtung in Vorderansicht,

Fig. 2 die Vorrichtung nach Fig. 1 in Seitenansicht,

Fig. 3 eine zweite Ausführungsform einer erfindungsgemäßen Vorrichtung im Ausschnitt und in Vorderansicht und

Fig. 4 die Vorrichtung nach Fig. 3 in Seitenansicht.

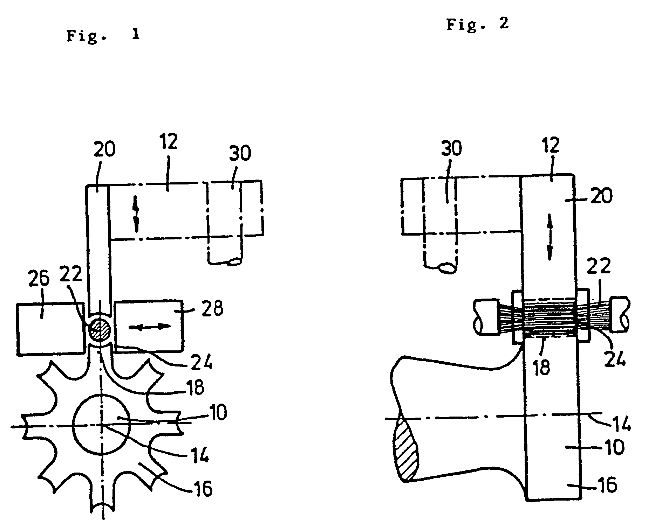

In Fig. 1 ist im Ausschnitt eine erfindungsgemäße Vorrichtung zum Verbinden bzw. Verdichten von elektrischen. Leitern wie Litzen dargestellt. Die Vorrichtung umfaßt eine Sonotrode 10 eines Ultraschallgerätes, das in bekannter Weise betrieben wird und wie es auch zum Beispiel in der DE-A-31 51 151 dem Prinzip nach beschrieben worden ist. Der Sonotrode 10 ist ein Amboß 12 zufeordnet. Dabei ist der Amboß 12 oberhalb der Sonotrode 10 angeordnet. Die Sonotrode 10 selbst ist zumindest bezüglich ihres Kopfes 16 vorzugsweise sternförmig ausgebildet und weist im Ausführungsbeispiel insgesamt acht Vorsprünge, von denen ein Vorsprung beispielhaft mit dem Bezugszeichen 18 versehen ist. auf. Diesem Vorsprung 18 ist ein Vorsprung 20 des Ambosses 12 zugeordnet. Der Vorsprung 18 befindet sich im Ausführungsbeispiel zentral oberhalb der Längsachse 14 der Sonotrode 10, kann aber auch außermittig angeordnet sein. Dabei sind die Vorsprünge 18 und 20 derart einander zugeordnet. daß sie die zu verbindenden elektrischen Leiter 22 enf umgeben können, damit bei erregter Sonotrode 10 ein Verschweißen bzw. Verdichten der Litzen 22 erfolgen kann. Um Leiter unterschiedlicher Dimensionierungen mit ein und demselben Gerät verbinden bzw. verdichten zu können, sind die Vorsprünge der Sternsonotrode unterschiedlich bemessen. Gleiches gilt für den zugeordneten Amboß. Damit bei diesem Schweißvorgang die Litzen 22 nicht seitlich aus dem Verdichtungsreum 24 entweichen können, wird im Ausführungsbeispiel nach Fig. 1 und 2 der Verdichtungsraum 24 zusätzlich seitlich von Fixier- oder Begrenzungselementen 26 und 28 umgeben, die auch als Backen zu bezeichnen sind. Demzufolge bilden die einander zugeordneten Vorsprünge 18 und 20 sowie Backen 26 und 28 die seitlichen Begrenzungsflächen für den Verdichtungsraum 24, dessen stirnseitigen öffnungen dazu bestimmt sind, die Litzen einzubringen bzw. zu entfernen.

Dabei verläuft die parallel zu den zu verschweißenden bzw. verdichtenden Litzen 22 verlaufende Längsachse des Verdichtungsraums 24 parallel zur Längsachse 14 der Sonotrode 10. Damit nach dem Verschweißen bzw. Verdichten der elektrischer Leiter 22 problemlos entfernt werden kann, wird zum einen der Amboß 12 von der Sonotrode 10 durch Anheben entfernt. Gleichzeitig kann zum Beispiel die rechte Backe bzw. das rechte Fixierungselement 28 entfernt werden (durch Pfeile angedeutet), um so den Verdichtungsraum 24 weiter zu öffnen.

Ist im Ausführungsbeispiel der Arbeitshub entlang einer Führung 28 zum Öffnen bzw. Verschließen des Verdichtungsraums 12 durch Pfeile im Bereich des Ambosses 12 angedeutet, so kann jener selbstverständlich auch von der Sonotrode 10 ausgeführt werden. Ferner ist darauf hinzuweisen, daß bei verschweißten Litzen 22 ein Entfernen aus dem Verdichtungsraum 24 dadurch erleichtert wird, daß die Sonotrode durch einen Nachimpuls erneut in Schwingung versetzt wird, wodurch ein gegebenenfalls Verkleben mit dem Sonotrodenvorsprung 18 gelöst wird.

Schließlich ist hervorzuheben, daß der Abstand zwischen den Begrenzungsflächen der Backen 26, 28 in Abhängigkeit von den Stärken der Leiter einstellbar ist, um so Verdichtungsräume unterschiedlichen Querschnitts zur Verfügung zu stellen. Selbstverständlich muß diesem dann die wirksame Sonotroden- und Amboßfläche angepasst werden.

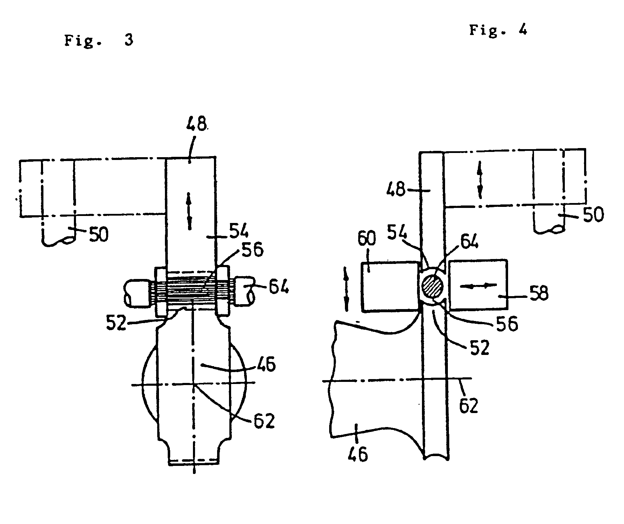

Ist in den Fig. 1 und 2 die Längsachse des Verdichtungsraumes 24 parallel zu der Längsachse 14 der Sonotrode 10 angeordnet, so ist in den Ausstellung nach den Fig. 3 und 4 eine um 90° gedrehte Ausrichtung vorgesehen. Mit anderen Worten verlaufen die kanalartig ausgebildeten Verdichtungsräume senkrecht der Längsachsen der Sonotroden, wobei jedoch die Verdichtungsräume selbst im wesentlichen wieder zentrisch ober- oder unterhalb der Längsachsen der Sonotroden angeordnet sind.

In Fig. 3 ist einer Sonotrode 46 ein Amboß 48 zugeordnet, der einen Arbeitshub entlang einer Führung 50 ausübt (selbstverständlich kann auch der Arbeitshub von der Sonotrode 46 erfolgen). Die Sonotrode 46 bzw. der Sonotrodenkopf weist an seiner Umfangsfläche Vorsprünge auf, von denen einer beispielsweise mit dem Bezugszeichen 52 vorgesehen ist. Dem Vorsprung 52 ist ein Vorsprung 54 des Ambosses 48 zugeordnet. Beide Vorsprünge 52 und 54, deren einander zugewandte Flächen rinnenartig ausgebildet sind, werden nun so einander zugeordnet, daß sie die oberen und unteren Begrenzungsflächen eines Verdichtungsraums 56 bilden. Dieser kann seitlich von Begrenzungselementen bzw. Backen 58 und 60 vollkommen geschlossen werden. Demzufolge ist der Kanal 56 nur noch über Öffnungen zugänglich, deren Verbindung senkrecht zur Sonotrodenlängsachse 62 verläuft. Durch die Öffnungen werden die zu verbindenden elektrischen Leiter wie zum Beispiel Litzen 64 geführt.

Sobald die Litzen zu einem Knotenpunkt durch von der Sonotrode 62 hervorgerufene Ultraschallschwingungen verschweißt sind, der Litzenknoten also quer zur Sonotrodenachse 62 verläuft, kan, der Amboß 68 entlang der Führung 50 angehoben werden. Gleichzeitig können die Backen 58 und 60 von dem Verdichtungsraum 56 entfernt werden. Dabei kann die Backe 58 von dem Verdichtungsraum 56 weggezogen und die Backe 60 in Richtung des Ambosses angehoben werden. Dies ist in der Fig. 6 durch Pfeile angedeutet. Umgekehrt erfolgt die Bewegung der einzelnen Elemente, wenn der Verdichtungsraum 56 geschlossen werden soll.

**Patentansprüche**

1. Vorrichtung zum Verbinden bzw. Verdichten elektrischer Leiter (22, 64) in Form von Litzen umfassend eine Schallschwingungen erzeugende Sonotrode (10, 62) mit dieser zugeordneter und zu dieser relativ bewegbarer als Amboß (12, 48) dienender Gegenelektrode sowie einem zur Aufnahme der Leiter bestimmten Verdichtungsraum (24, 56), von dem gegenüberliegende Begrenzungsflächen von jeweils zumindest einer Fläche der Sonotrode und des Ambosses gebildet sind, wobei der Verdichtungsraum in seinem Querschnitt in einer ersten Richtung durch Verändern des Abstands der Fläche von Sonotrode und Amboß einstellbar ist, **dadurch gekennzeichnet,** daß die verbleibenden gegenüberliegenden Begrenzungsflächen von Begrenzungselementen (26, 28, 58) gebildet sind, von denen zur Veränderung des Querschnitts des Verdichtungsraums (24, 56) in einer zur ersten Richtung senkrecht verlaufenden Richtung zur Einstellung des Verdichtungsraums auf Leiter (62, 64) unterschiedlicher Querschnitte zumindest ein Begrenzungselement (28, 58) eine verschiebbare bzw. wegkippbare Backe (28, 58) ist.

2. Vorrichtung nach Anspruch 1, dadurch gekennzeichnet, daß die Sonotrode (10, 32, 62, 66) einen Vorsprung (18, 52) oder eine Ausnehmung (40, 72) aufweist, dem bzw. der ein Vorsprung (20, 42, 54, 70) des Ambosses (12, 34, 48, 68) zugeordnet ist, und daß die einander zugewandten Flächen des Vorsprungs oder der Ausnehmung der Sonotrode und des Vorsprungs des Ambosses die oberen und unteren Begrenzungsflächen des Verdichtungsraums (24, 36, 56, 74) bilden, der vorzugsweise zentral ober oder unterhalb der Sonotrodenlängsachse (14, 38, 62, 76) angeordnet ist.

3. Vorrichtung nach Anspruch 1, dadurch gekennzeichnet, daß die Begrenzungselemente als Backen (26, 28, 58, 60) den Verdichtungsraum (24, 56) seitlich begrenzen, wobei zumindest ein Begrenzungselement vorzugsweise senkrecht zur Sonotrodenlängsachse (14, 38, 62, 76) verschiebbar angeordnet ist.

4. Vorrichtung nach Anspruch 1, dadurch gekennzeichnet, daß die parallel zu den zu verbindenden Leitern (64, 78) verlaufende Längsachse des kanalartig ausgebildeten Verdichtungsraums (56, 74) senkrecht zur Längsachse der Sonotrode (62, 76) verläuft.

5. Vorrichtung nach zumindest Anspruch 1, dadurch gekennzeichnet, daß die einander zugewandten Flächen der Sonotrode (10, 46, 32, 66) und des Ambosses (12, 34, 48, 68) konkav bzw. rinnenförmig und eine Struktur aufweisend ausgebildet sind.

6. Vorrichtung nach Anspruch 1, dadurch gekennzeichnet, daß die Vorrichtung mobil ausgebildet ist.

7. Vorrichtung nach Anspruch 6, dadurch gekennzeichnet, daß die die Schallschwingungen erzeugende mit einem Booster amplitudenverstärkend arbeitende Sonotrode und der Booster ineinanderübergehend eine Einheit bilden.

8. Vorrichtung nach Anspruch 7, dadurch gekennzeichnet, daß mehrere mobil ausgebildete Vorrichtungen von einem einzigen Generator versorgbar sind.

**Claims**

1. Device for joining or compressing electrical conductors (22, 64) in the form of strands which comprises a sonotrode (10, 62), which generates sound

vibrations, a counter electrode, which is associated with and movable relative to the latter and serves as an anvil (12, 48), and a compression space (24, 56) for accommodating the conductors, the opposite boundary surfaces of which space are in each case formed by at least one surface of the sonotrode and the anvil, the compression space being adjustable in cross section in a first direction by altering the spacing between the surfaces of the sonotrode and the anvil, characterised in that the remaining opposite boundary surfaces are formed by boundary elements (26, 28, 58), at least one (28, 58) of which is a jaw (28, 58) which can be displaced or tilted away in order to alter the cross section of the compression space (24, 56) in a direction which is perpendicular to the first direction so as to adjust the compression space to conductors (62, 64) of varying cross sections.

2. Device according to claim 1, characterised in that the sonotrode (10, 32, 62, 66) comprises a projection (18, 52) or a recess (40, 72), with which a projection (20, 42, 54, 70) of the anvil (12, 34, 48, 68) is associated, and that the facing surfaces of the projection or the recess of the sonotrode and the projection of the anvil form the upper and lower boundary surfaces of the compression space (24, 36, 56, 74), which is preferably arranged centrally above or below the longitudinal axis (14, 38, 62, 76) of the sonotrode.

3. Device according to claim 1, characterised in that the boundary elements, in the form of jaws (26, 28, 58, 60), define the compression space (24, 56) at the sides, at least one boundary element preferably being arranged such that it can be displaced perpendicularly to the longitudinal axis (14, 38, 62, 76) of the sonotrode.

4. Device according to claim 1, characterised in that the longitudinal axis, which extends parallel to the conductors (64, 78) to be joined, of the compression space (56, 74), which is formed like a channel, is perpendicular to the longitudinal axis of the sonotrode (62, 76).

5. Device according to at least claim 1, characterised in that the facing surfaces of the sonotrode (10, 46, 32, 66) and the anvil (12, 34, 48, 68) are concave or formed like troughs and are structured.

6. Device according to claim 1, characterised in that the device is mobile.

7. Device according to claim 6, characterised in that the sonotrode, which generates the sound vibrations and operates with a booster so as to increase the amplitude, and the booster together form a unit.

8. Device according to claim 7,

characterised in that several mobile devices can be powered by a single generator.

## Revendications

1. Dispositif pour joindre ou comprimer des conducteurs électriques (22, 64) sous forme de torons, dispositif comprenant une sonotrode (10, 62) génératrice de vibrations acoustiques, une contre-électrode, associée à celle-ci et mobile par rapport à celle-ci, pour servir d'enclume (12, 48), ainsi qu'une chambre de compression (24, 56) destinée à recevoir les conducteurs, et dont les surfaces de délimitation placées l'une en face de l'autre sont constituées par au moins une surface de la sonotrode et de l'enclume, la section transversale de la chambre de compression étant susceptible d'être réglée dans une première direction en modifiant la distance entre les surfaces de la sonotrode et de l'enclume, dispositif caractérisé en ce que les surfaces de délimitation restantes placées l'une en face de l'autre sont constituées par des éléments de délimitation (26, 28, 58), dont l'un au moins (28, 58) est une mâchoire (28, 58) susceptible de coulisser ou de basculer pour permettre de modifier la section transversale de la chambre de compression (24, 56) dans une direction perpendiculaire à la première direction, afin de pouvoir régler la chambre de compression sur des conducteurs de différentes sections transversales.

2. Dispositif selon la revendication 1, caractérisé en ce que la sonotrode (10, 32, 62, 66) comporte une saillie (18, 52) ou un creux (40, 72), à laquelle ou auquel correspond une saillie (20, 42, 54, 70) de l'enclume (12, 34, 46, 65), et les surfaces en regard l'une de l'autre de la saillie ou du creux de la sonotrode et de la saillie de l'enclume constituent les surfaces supérieures et inférieures de délimitation de la chambre de compression (24, 36, 56, 74), qui est disposée de préférence centralement au dessus ou au dessous de l'axe longitudinal (14, 38, 62, 76) de la sonotrode.

3. Dispositif selon la revendication 1, caractérisé en ce que les éléments de délimitation en forme de mâchoires (26, 28, 58, 60) délimitent latéralement la chambre de compression (24, 56), au moins un élément de délimitation étant disposé de façon à pouvoir coulisser, de préférence perpendiculairement à l'axe longitudinal de la sonotrode (14, 35, 62, 76).

4. Dispositif selon la revendication 1, caractérisé en ce que l'axe longitudinal, s'étendant parallèlement aux conducteurs (64, 78) à relier, de la chambre de compression (56, 74) réalisée en forme de canal, est perpendiculaire à l'axe longitudinal de la sonotrode (62, 76).

5. Dispositif selon au moins la revendication 1, caractérisé en ce que les surfaces en regard l'une de l'autre de la sonotrode (10, 46, 32, 66) et de l'enclume (12, 34, 48, 68) sont concaves ou en forme de rigoles et comportent une structure.

6. Dispositif selon la revendication 1, caractérisé en ce que ce dispositif est mobile.

7. Dispositif selon la revendication 6, caractérisé en ce que la sonotrone génératrice de vibrations acoustiques et fonctionnant avec un survolteur pour augmenter l'amplitude, forme, en se confondant avec ce survolteur, une unité.

8. Dispositif selon la revendication 7, caractérisé en ce que plusieurs dispositifs, prévus mobiles, sont susceptibles d'être alimentés par un seul générateur.

Fig. 1

Fig. 2

Fig. 3

Fig. 4